Europäisches Patentamt

European Patent Office

Office européen des brevets

(11) Veröffentlichungsnummer : **0 019 057**
**B1**

(12) **EUROPÄISCHE PATENTSCHRIFT**

(45) Veröffentlichungstag der Patentschrift :
23.05.84

(21) Anmeldenummer : **80101455.6**

(22) Anmeldetag : **20.03.80**

(51) Int. Cl.³ : **F 02 M 35/022**, F 02 C 7/052

(54) Fliehkraftstaubabscheidersystem mit mehreren Stufen.

(30) Priorität : 10.05.79 DE 2918765

(43) Veröffentlichungstag der Anmeldung :
26.11.80 Patentblatt 80/24

(45) Bekanntmachung des Hinweises auf die Patenterteilung : 23.05.84 Patentblatt 84/21

(84) Benannte Vertragsstaaten :
FR GB NL

(56) Entgegenhaltungen :
DE-A- 2 458 819
FR-A- 360 720
FR-A- 1 571 650
FR-A- 1 585 516
FR-A- 1 594 537
US-A- 3 534 548
US-A- 3 884 658
US-A- 3 884 660
US-A- 3 902 876

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Brockmann, Heinz, Dipl.-Ing.
Holzweg 25
D-6380 Bad Homburg 6 (DE)

**Beschreibung**

Die Erfindung betrifft ein Fliehkraftstaubabscheidersystem für luftansaugende Maschinen, insbesondere für Gasturbinen und andere Brennkraftmaschinen, mit einer Abscheiderstufe, die ein im wesentlichen zylindrisches Mantelrohr, einen im vorderen Teil des Mantelrohres angeordneten, im wesentlichen den gesamten Querschnitt des Mantelrohres einnehmenden Zykloneinsatz und einen koaxial dem Mantelrohr nachgeschalteten, als Diffusor ausgebildeten Luftaustrittsstutzen aufweist, wobei der Diffusor und das Mantelrohr unter Bildung eines Ringraumes teilweise ineinandergreifen.

Ein derart gattungsgemäßes Fliehkraftstaubabscheidersystem ist aus der US-A-3,884,658 bekannt. Hierbei sind die einzelnen Abscheiderstufen parallel geschaltet und identisch ausgebildet, so daß dieses Staubabscheidersystem lediglich bezüglich einer gleichmäßigen Verunreinigung der anzusaugenden Luft optimiert sein kann. Dies führt dazu, daß bei einer Luftverunreinigung mit uneinheitlichen Staubpartikeln, wie sie insbesondere im Fahrbetrieb von Baustellenfahrzeugen oder militärischen Kettenfahrzeugen für die hierbei zum Einsatz kommenden luftansaugenden Brennkraftmaschinen sehr häufig anzutreffen ist, der Abscheidegrad des Staubscheidersystems für alle Staubbestandteile der Luft ungleichmäßig hoch und somit der Gesamtabscheidegrad unzulänglich ist.

Weiterhin sind aus der DE-A-24 58 819 und US-A-3,902,876 Abscheidersysteme bekannt, die aber der Nassentstaubung bzw. ausschließlich der Flüssigkeitsabscheidung dienen. Bei der Anordnung nach der DE-A-24 58 819 ist das Abscheidersystem zweistufig ausgebildet, wobei die beiden mit Schälschlitzen versehenen Abscheiderstufen jeweils den gleichen Strömungsdurchmesser aufweisen und mit Zykloneinsätzen mit zunehmendem Drall versehen sind. Vor den Zykloneinsätzen sind jeweils halbkugelige Nabenvorsätze zur Erhöhung der Strömungsgeschwindigkeit vorgesehen, wobei jedoch nach den Zykloneinsätzen durch einen plötzlichen Querschnittssprung die Strömungsgeschwindigkeit schlagartig abnimmt, was mit erheblichen Drosselverlusten verbunden ist, so daß diese Anordnung insbesondere bei luftansaugenden Brennkraftmaschinen, bei denen Drosselverluste gleichzusetzen sind mit Verlustleistung der Brennkraftmaschine, nicht angebracht ist. Bei einer Anordnung nach der US-A-3,902,876, die zum Trennen von Flüssigkeits-/Dampfgemischen in Kernreaktoren eingesetzt werden soll, sind die einzelnen Abscheiderstufen mit einem unterschiedlichen Strömungsdurchmesser ausgebildet. Aussagen über die Anpassung der Zykloneinsätze an die unterschiedlichen Durchmesser der Abscheiderstufen sind hier nicht angegeben.

Es ist Aufgabe der vorliegenden Erfindung, ein einfaches, wartungsfreies Fliehkraftstaubabscheidersystem mit mehreren Stufen zu schaffen, dessen einzelne Stufen für verschiedene Korngrößen optimiert sind, das nur geringe Druckverluste verursacht, aus nur wenigen Bauteilen besteht und das zur Steigerung des möglichen Durchsatzes ohne Veränderung zu mehreren Einheiten in einem gemeinsamen Gehäuse zusammengefaßt werden kann.

Diese Aufgabe wird erfindungsgemäß durch die Kombination der Merkmale nach dem kennzeichnenden Teil des Anspruchs gelöst.

Vorteil der Kombination dieser Merkmale ist es, daß der Drehimpuls der Luftströmung unter gleichzeitiger Verringerung des Strömungsquerschnitts stufenweise erhöht wird und damit ein Ausscheiden immer feinerer Verunreinigungen möglich ist. Die Strömung in den geraden koaxialen Rohrabschnitten und die im wesentlichen gleichmäßige Querschnittsveränderung des Strömungsweges ermöglicht dies bei geringen Druckverlusten.

Die auf ein Staubpartikel in einem Zyklon durch die Fliehkraft verursachte und den Luftwiderstand verminderte radiale Beschleunigung nimmt unter Annahme gleichen Bahnradius und gleicher Momentangeschwindigkeit für Staubpartikel gleicher Dichte und Form mit ihrer Größe zu. Daher gelangen als erstes die größeren Staubpartikel an die Wandungen und werden erfindungsgemäß abgeschieden. Die verbliebenen kleineren Staubpartikel müssen auf entsprechendem Bahnradius eine gleich große radiale Beschleunigung erfahren, um mit gleicher Geschwindigkeit an die Wandungen zu gelangen und dort abgeschieden zu werden. Hierzu muß die Fliehkraft erhöht werden, was durch den höheren Drall im jeweils folgenden Zyklon verwirklicht wird, die den im vorhergehenden Zyklon verursachten Drehimpuls des Luftstromes erhöht. Da zudem der Durchmesser des nachfolgenden Mantelrohres kleiner ist, verringert sich der Weg der Staubpartikel bis zur Wandung. In dieser Weise können Staubabscheider vergleichbarer Länge auf verschieden Korngrößen optimiert sein.

Die strömungstechnisch und in der Herstellung günstige erfindungsgemäße Ausführung des Fliehkraftstaubabscheidersystems verwendet zylindrische Mantelrohre für dir Staubabscheider und den Luftaustrittsstutzen, der im Durchmesser in günstiger Weise an den Eintrittsstutzendurchmesser der folgenden luftansaugenden Maschine angepaßt sein sollte.

Bevorzugt stehen radiale Abstützelemente in den durch die ineinandergreifenden Staubabscheider und den Diffusor gebildeten Ringräumen. Dadurch bildet das mehrstufige Fliehkraftstaubabscheidersystem eine starre Einheit. Diese kann jeweils als Ganzes montiert werden, wozu im Normalfall je zwei bis drei Befestigungspunkte am Umfang in zwei zur Achse senkrechten Ebenen ausreichen sollten. In Weiterführung dieses Gedankens erscheint es als günstig, die ganze Einheit einstückig, z. B. im Spritzgußverfahren herzustellen.

Die obengenannten Befestigungen können durch mindestens zwei senkrecht zur Achse stehende Platten dargestellt sein, die abschließend am ganzen Umfang der Staubscheider bzw. des Luftaustrittsstutzens angreifen und von denen eine vor dem ersten Ringraum und eine nach dem letzten Ringraum angeordnet ist. Auf diese Weise werden ein oder mehrere Staubaustragungsräume gebildet, in denen sich die Staubpartikel sammeln können und aus denen Staub kontinuierlich oder periodisch entfernt werden kann.

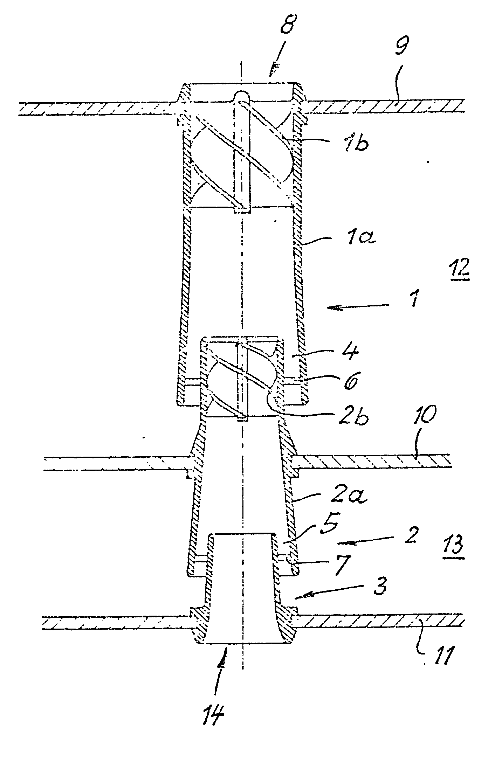

Ein Ausführungsbeispiel der Erfindung ist in der Zeichnung im Längsschnitt dargestellt und wird im folgenden beschrieben.

In der Zeichnung ist 1a das zylindrische Mantelrohr des in Richtung des Durchflusses ersten Staubscheiders 1, 1b ist dessen Zykloneinsatz, 2a das Mantelrohr eines in Durchflußrichtung zweiten Staubscheiders 2, 2b dessen Zykloneinsatz und 3 ein in Durchflußrichtung nachge- ordneter, als Diffusor ausgebildeter Luftaustritts- stutzen. Die zu reinigende Luft tritt an einer strömungsgünstig ausgebildeten Eintrittsöffnung 8 in den ersten Staubabscheider 1 ein und wird beim Durchströmen des Zykloneinsatzes 1b mit einem Drehimpuls versehen. Ein Nebenluftstrom, der durch Fliehkraft nach außen beförderte Staubpartikel enthält, gelangt durch einen Ringraum 4 in einen Staubaustragungsraum 12. Der Hauptstrom gelangt in den zweiten Staubabscheider und wird durch einen Zykloneinsatz 2b, der einen größeren Drall als der Zykloneinsatz 1b hat, mit einem erhöhte Drehimpuls versehen. Ein zweiter Nebenstrom, der kleinere durch die Fliehkraft nach außen beförderte Staubpartikel als der erste Nebenstrom enthält, gelangt durch einen Ringraum 5 in einen Staubaustragungsraum 13. Der gereinigte Hauptstrom verläßt das Luftfilterelement durch den Luftaustrittsstutzen 3 an seiner Austrittsöffnung 14. Der erste Staubabscheider 1 stützt sich an einer Platte 9 ab, der zweite Staubabscheider 2 an einer Platte 10 und der Luftaustrittsstutzen 3 an einer Platte 11, wobei die Platten miteinander die Wandungen der Staubaustragungsräume 12 und 13 bilden. Da sich die Staubabscheider und der Luftaustrittsstutzen untereinander durch Abstützelemente 6 und 7 abstützen, stellt die Platte 10 im wesentlichen eine Trennwand zwischen den Staubaustragungsräumen 12 und 13 dar, die gegebenenfalls eine getrennte Absaugung bzw. Reinigung der beiden Stufen erlaubt, erfindungsgemäß jedoch auch entfallen kann.

## Anspruch

Fliehkraftstaubabscheidersystem für luftansau- gende Maschinen, insbesondere für Gasturbinen und andere Brennkraftmaschinen, mit einer Abscheiderstufe (2), die ein im wesentlichen zylindrisches Mantelrohr (2a), einen im vorderen Teil des Mantelrohres (2a) angeordneten, im wesentlichen den gesamten Querschnitt des Mantelrohres (2a) einnehmenden Zykloneinsatz (2b) und einen koaxial dem Mantelrohr (2a) nach- geschalteten, als Diffusor ausgebildeten Luftaus- trittsstutzen (3) aufweist, wobei der Diffusor (3) und das Mantelrohr (2a) unter Bildung eines Ringraumes (5) teilweise ineinandergreifen, gekennzeichnet durch die Kombination folgender Merkmale :

a) der mit dem Diffusor (3) versehenen Abscheiderstufe (2) sind ein oder mehrere, ebenfalls mit einem zylindrischen Mantelrohr (1a) und ein- em Zykloneinsatz (1b) versehene Abscheiderstu- fen (1) koaxial vorgeschaltet ;

b) die Zykloneinsätze (1b, 2b) der einzelnen Abscheiderstufen (1, 2) sind im gleichen Drehsinn orientiert, wobei der Drall der einzelnen Zyklon- einsätze (1b, 2b) in Durchflußrichtung zunimmt ;

c) die Eintrittsdurchmesser der einzelnen Abscheiderstufen (1, 2) werden jeweils in Durchflußrichtung kleiner, wobei die Abscheiderstufen (1, 2) in koaxialer Anordnung unter Bildung eines Ringraumes (4) teilweise ineinandergreifen.

## Claim

A centrifugal dust extracting system for an air- aspirating machine, particularly for a gas turbine and any other internal combustion engine, the system comprising a basic extractor stage (2) including a substantially cylindrical casing (2a), a cyclone insert (2b) disposed in the upstream portion of the casing (2a) and occupying substantially the whole cross-sectional area thereof, and an air-outlet pipe (3) constructed to operate as a diffusor and disposed downstream of and coaxially with the casing (2a) in such a way that the diffusor (3) and the casing (2a) partially overlap so as to form an annular space (5) between their overlapping parts, characterized by a combination of the following features :

a) one or more extractor stages (1) each including a cylindrical casing (1a) and a cyclone insert (1b) is or are disposed upstream of and coaxially with the basic extractor stage (2) provided with the diffusor (3) ;

b) the cyclone inserts (1b, 2b) of the respective extractor stages (1, 2) are arranged to rotate in the same direction, and the twist of each of the cyclone inserts (1b, 2b) increases from one to the subsequent one in the direction of the air flow ;

c) the diameter of the air inlet of each of the extractor stages (1, 2) decreases from one to the subsequent one in the direction of the air flow, and the extractor stages (1, 2) which are arranged coaxially partially overlap so as to form an annular space (4) between their overlapping parts.

## Revendication

Epurateur de poussière du type à tourbillonnement pour des machines aspirant de l'air, notamment pour des turbines à gaz et autres machines à combustion interne, avec un étage d'épuration (2), qui comporte un tube enveloppe (2a) essentiellement cylindrique, une garniture de cyclone (2b) disposée dans la partie amont du tube enveloppe (2a) et occupant essentiellement la totalité de la section transversale du tube enveloppe (2a) et une tubulure de sortie d'air (3), revêtant la forme d'un diffuseur, et branchée en aval du tube enveloppe (2a) co-axialement à celui-ci, ce diffuseur (3) et le tube enveloppe (2a) pénétrant partiellement l'un dans l'autre en ménageant un espace annulaire (5), épurateur de poussière caractérisé par la combinaison des caractéristiques suivantes :

a) en amont de l'étage d'épuration (2) muni du diffuseur (3) sont branchés, co-axialement, un ou plusieurs étages de diffusion (1), également munis d'un tube enveloppe cylindrique (1a) et d'une garniture de cyclone (1b),

b) les garnitures de cyclone (1b, 2b) des différents étages d'épuration (1, 2) sont orientées selon le même sens de rotation, l'inclinaison des différentes garnitures de cyclone (1b, 2b) augmentant dans le sens de l'écoulement,

c) les diamètres d'entrée des différents étages d'épuration (1, 2) deviennent respectivement plus petits dans le sens de l'écoulement, les étages d'épuration (1, 2) disposés co-axialement pénétrant alors partiellement l'un dans l'autre en ménageant un espace annulaire (4).